# EUROPEAN PATENT SPECIFICATION

(11) **EP 2 052 377 B1**
(45) Date of publication and mention of the grant of the patent: **01.02.2012**
(21) Application number: 07768869.5
(22) Date of filing: 25.07.2007
(51) Int. Cl.: B60W 40/08, G06F 3/048, G06F 9/44

(54) **ADAPTIVE DRIVE SUPPORTING APPARATUS AND METHOD**
VORRICHTUNG UND VERFAHREN ZUR ADAPTIVEN FAHRUNTERSTÜTZUNG
APPAREIL ET PROCEDE ADAPTATIFS DE CONDUITE ASSISTEE

(30) Priority: 11.08.2006 KR 20060076361
(43) Date of publication of application: 29.04.2009
(73) Proprietor: Electronics and Telecommunications Research Institute, Yusong-gu, Daejeon-city 305-350 (KR)
(72) Inventor: YOON, Daesub, Daejeon-city, Republic Of Korea 305-759 (KR); LEE, Soocheol, Daejeon-city 302-182 (KR); KWON, Oh-Cheon, Daejeon-city 305-728 (KR); KIM, Sun-Joong, Daejeon-city 302-772 (KR); LEE, Moon-Soo, Daejeon-city 305-330 (KR); CHOI, Yeon-Jun, Daejeon-city 305-770 (KR)
(74) Representative: Betten & Resch
(86) International application number: PCT/KR2007/003564
(87) International publication number: WO 2008/018700

(56) References cited:
- WO-A-02/30700
- JP-A- 2003 211 933
- JP-A- 2004 110 546
- JP-A- 2005 326 288
- KR-A- 20050 034 862
- US-B2- 6 974 414
- REMBOSKI D ET AL: "Driver Performance Inprovement through the Driver Advocate: A Research Initiative toward Automotive Safety" SOCIETY OF AUTOMOTIVE ENGINEERS PUBLICATIONS, XX, XX, 1 November 2000 (2000-11-01), pages 1-10, XP002385037
- PIECHULLA WALTER ET AL: "Reducing drivers' mental workload by means of an adaptive man-machine interface" 20030101; 20030000, vol. 6, 1 January 2003 (2003-01-01), pages 233-248, XP002413779
- CELLARIO, MASSIMO: "Human-centered intelligent vehicles: toward multimodal interface integration" IEEE Intelligent Systems IEEE USA, vol. 16, no. 4, July 2001 (2001-07), pages 78-81, XP002534691 ISSN: 1094-7167
- SARTER ET AL: "Multimodal information presentation: Design guidance and research challenges" INTERNATIONAL JOURNAL OF INDUSTRIAL ERGONOMICS, ELSEVIER, vol. 36, no. 5, 1 May 2006 (2006-05-01), pages 439-445, XP025068573 ISSN: 0169-8141 [retrieved on 2006-05-01]

## Description

### Technical Field

The present invention relates to personalized user interface providing techniques capable of supporting the driving safety and convenience of a driver by developing a human modeling technique based on a driver' s driving pattern and a driving environment.

### Background Art

Most conventional telematics interface techniques have been developed by co-operations between automobile companies and colleges in Europe and the USA. In addition, the techniques have also been developed to be suitable for the specific road environments of the associated nations, Therefore, techniques cannot be easily applied to other nations. Moreover, since most of the techniques are directed to general drivers, the techniques cannot provide various telematics services dependent on various characteristics of various drivers.

The present invention includes a human modeling technique based on the analysis of data relating to a driving environment and a driver's characteristics, and a personalized telematics user interface technique capable of supporting the driving safety and the convenience of use in consideration of the human modeling technique, These techniques are useful for not only the telematics but also other fields, have far-reaching implications, and are highly leading.

WO 02/30700 A2, on which the preamble of claims 1 and 7, respectively, is based, provides a method for improving driver performance including the steps of receiving vehicle operating data from the vehicle; monitoring an interior portion of the vehicle and receiving operator activity data from the interior portion of the vehicle; receiving vehicle environment data from the environment external to the vehicle; monitoring the vehicle operator and receiving operator condition data relating to a condition of the vehicle operator; recording an operator performance assessment based on the vehicle operating data, the operator activity data, the vehicle environment data and the operator condition data; and reporting the operator performance assessment to the operator.

### Disclosure of Invention

### Technical Problem

Recently, various terminals have been commercially provided, and telematics providers have initiated telematics services, so that users of telematics services have gradually increased. Therefore, various types of telematics services have been provided to drivers. In conventional telematics services, accuracy and variety of information are considered to be important factors, but the convenience and safety of drivers are not taken into consideration. Therefore, when the driver drives a car, the driver's manipulation of a telematics apparatus may cause an accident.

### Technical Solution

To address this problem, techniques for dynamically changing an interface of a telematics apparatus based on recognition of a driver's characteristics and internal and external conditions of the vehicle of the driver are required. Unlike conventional telematics interface techniques, in these adaptive telematics interface providing techniques, various features are taken into consideration, so that a wide range of telematics services can be easily utilized even by persons that are not apt at accessing information or at using information apparatuses. In addition, it is possible to minimize a problem in that use of the telematics apparatus diverts the attention of a driver. Moreover, in the adaptive telematics interface providing techniques, a human model is established by analyzing internal and external information about the driver. Thus, these techniques are applicable to not only the telematics but also the other various fields.

The above problem is solved by an apparatus according to claim 1 and a method according to claim 7.

### Advantageous Effects

According to the present invention, an adaptive telematics human interface technique is provided, and a personalized telematics driver interface technique capable of providing a driving safety and convenience using a human model based on a driving environment and personal characteristics is provided. In addition, by using the personalized telematics interface technique, it is possible to overcome limits of a telematics service technique lagging behind other advanced countries and to attain superiority over them.

According to the present invention, it is possible to lead domestic and international standardizations by holding a modeling technique obtained from an analysis of data about driver's characteristics, states of a car, and external environment. In addition, by applying the modeling technique to fields of interaction between human and computers, it is possible to provide various convergence services.

According to the present invention, the adaptive telematics human interface technique provides an environment where persons who are not apt at using an information apparatus can easily use various telematics services. Accordingly, the adaptive telematics human interface technique alleviates the problem of ' digital divide ' and is developed into a new convergence technique based on combinations with other information apparatuses.

According to the present invention, it is possible to provide economical effects, namely, activate a telematics service market, to provide social effects, namely, reduce the digital divide problem and ensure driving safety, and to provide industrial effects, namely, develop into a new high-valued industry into which high technologies, such as broadcasting, mobile telecommunications, and automobile, are incorporated.

### Description of Drawings

The above and other features and advantages of the present invention will become more apparent by describing in detail exemplary embodiments thereof with reference to the attached drawings in which:

FIG. 1 is a view showing the construction of an adaptive drive supporting apparatus according to an embodiment of the present invention;

FIGS. 2A and 2B are views showing a data collecting process performed by a statistics database unit of the adaptive drive supporting apparatus shown in FIG. 1. according to an embodiment of the present invention;

FIG. 3 is a view showing an example of the statistics database unit of the adaptive drive supporting apparatus shown in FIG. 1, according to an embodiment of the present invention;

FIG. 4 is a view showing a data collecting method performed by a personal characteristic setting unit of the adaptive drive supporting apparatus shown in FIG. 1, according to an embodiment of the present invention;

FIG. 5 is a view showing an example of the personal characteristic setting unit of the adaptive drive supporting apparatus shown in FIG. 1, according to an embodiment of the present invention;

FIG. 6 is a view showing the construction of a unit which determines a degree of attention suitable for a personal characteristic, according to an embodiment of the present invention;

FIG. 7 is a view showing a data collecting process performed by the personal characteristic setting unit of the adaptive drive supporting apparatus shown in FIG. 1, according to an embodiment of the present invention;

FIG. 8 is a block diagram for providing suitable interfaces for a driver based on his/ her situation, according to an embodiment of the present invention;

FIG. 9 is a flowchart showing a method of providing an interface suitable for a driver 's situation, according to an embodiment of the present invention; and

FIG. 10 is a flowchart showing an adaptive drive supporting method according to an embodiment of the present invention.

### Best Mode

The present invention provides an apparatus and method of supporting an adaptive drive in consideration of a driver and internal and external conditions of a driver's vehicle in order to increase the usability and stability. The invention is defined in independent claims 1 and 7. Preferred embodiments are disclosed in the dependent claims.

According to an aspect of the present invention, there is provided an adaptive drive supporting apparatus comprising; a statistics database unit which stores and manages information on an average degree of attention required when a driving operation, a state of a car, or an external environment changes, information on degrees of attention required for manipulations of interfaces of the car, and a similarity between the functions of the interfaces; a personal characteristic setting unit which sets an individual degree of attention for each driver based on the average degree of attention according to a change in at least one of the driving operation, the state of the car, and the external environment; and an interface providing unit which determines whether or not a sum of the individual degree of attention and the degree of attention required when each driver manipulates a requested interface is larger than a predetermined threshold degree of attention required for safe driving.

The adaptive drive supporting apparatus further comprises an adaptive interface providing unit. When the sum of the individual degree of attention and the degree of attention required for interface manipulation is larger than the threshold degree of attention, the adaptive interfacing providing unit searches for a new substitute for the requested interface based on the similarity and provides the new substitute for the interface to the driver. When there is no substitute for the interface, the adaptive interface providing unit issues an alert message to the driver,

According to another aspect, there is provided an adaptive driving supporting method comprising: storing and managing information on an average degree of attention required when a driving operation, a state of a car, or an external environment changes, information on degrees of attention required for manipulations of interfaces of the car, and a similarity between the functions of the interfaces; setting an individual degree of attention for each driver based on the average degree of attention according to a change in at least one of the driving operation, the state of the car, and the external environment; and determining whether or not a sum of the individual degree of attention and the degree of attention required when each driver manipulates a requested interface is larger than a predetermined threshold degree of attention required for safe driving.

### Mode for the Invention

Hereinafter, the present invention will be described in detail by explaining exemplary embodiments of the invention with reference to the attached drawings. Like reference numerals in the drawings denote like elements.

In order to clarify the invention, descriptions of well known functions or constructions may be omitted.

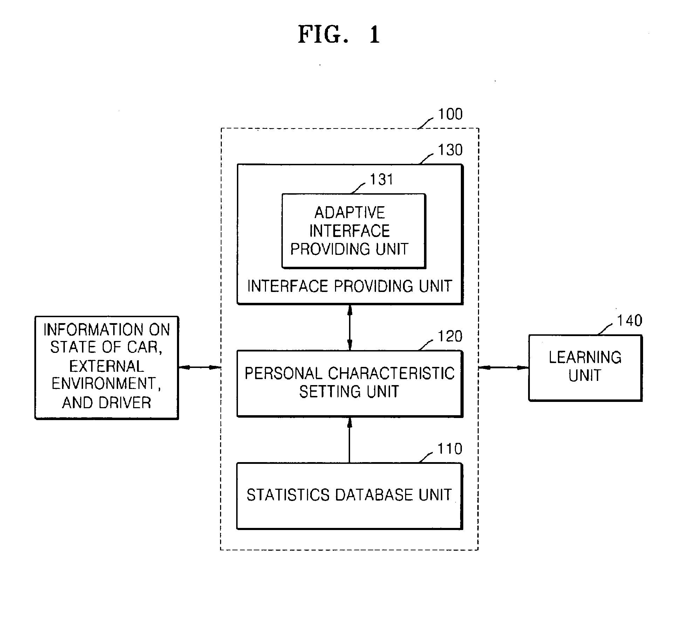

FIG. 1 is a block diagram of the construction of an adaptive drive supporting apparatus 100 according to an embodiment of the present invention. Referring to FIG. 1, the adaptive drive supporting apparatus 100 includes a statistics database unit 110, a personal characteristic setting unit 120, and an interface providing unit 130.

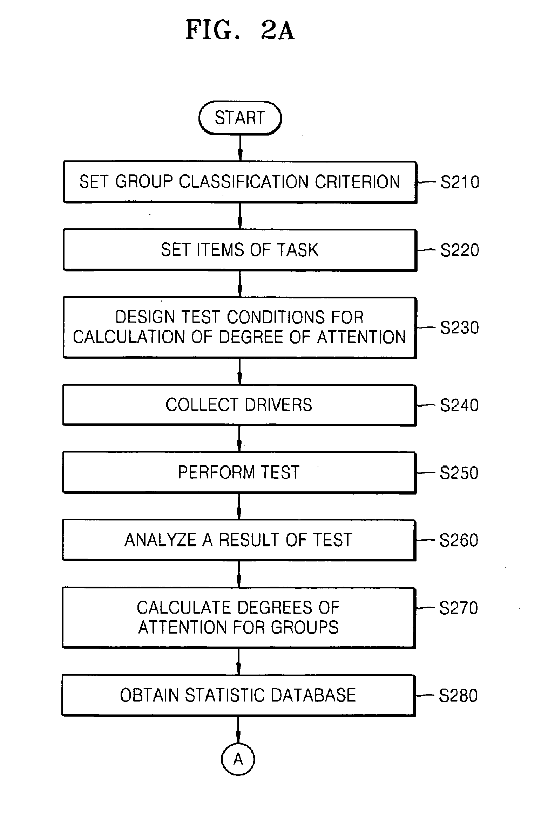

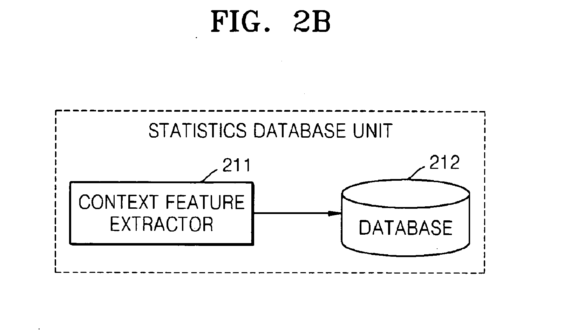

The statistics database unit 110 stores and manages information on an average degree of attention of a driver required when there is a change in at least one of a driving operation, the state of a driver's car, and an external environment, information on a degree of attention required for manipulation of interfaces of the driver's car, and information on a similarity between the functions of the interfaces of the car. The statistics database unit 110 will be described in greater detail later with reference to FIGS. 2A and 2B.

In order to obtain the average degree of attention, a number of drivers are firstly grouped according to a predetermined driver classification criterion such as gender, age, race, and physical features, and degrees of attention required for individual drivers of each driver group when there is a change in at least one of conditions, for example, a driving operation, the state of the driver's car, and an external environment, are averaged.

The personal characteristic setting unit 120 searches the statistics database unit 110 for the driver group to which a specific driver belongs and the average degree of attention required for the driver group. For example, the personal characteristic setting unit 120 may check the average degree of attention required for an age group in which the driver is included when the driver performs a specific operation.

In this case, the personal characteristic setting unit 120 stores a driving pattern of the driver, and resets an individual degree of attention of each driver according to a change in at least one of the driving operation, the state of the car, and the external environment by reflecting the driver's driving pattern in the average degree of attention.

For example, when drivers of a group to which a twenty-seven-year-old man belongs, for example, male drivers in their twenties, are required to perform a radio manipulation, it is checked how much degree of attention statistic is required for drivers under the same or similar internal and external driving conditions (for example, at a speed of 40km/h and on a slippery road). For example, the degree of attention statistic may be 80.

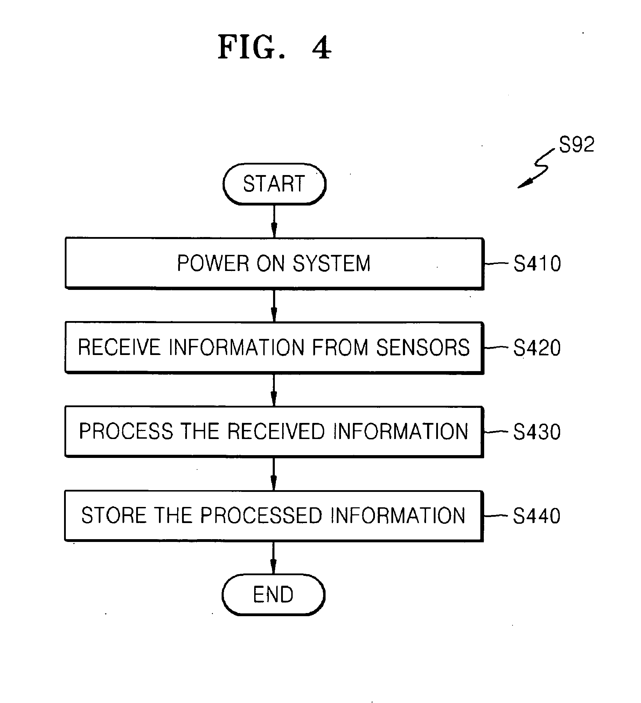

When at least one of driving conditions of the twenty-seven year-old man, such as the driving operation, the state of the car, and the external environment, changes, the driving condition changes are separately stored and updated, and a degree of attention required for the twenty-seven year-old driver under the changed driving conditions is reset based on the checked degree of attention statistic. A detailed description thereof will be made later with reference to FIGS. 4 to 6.

The interface providing unit 130 determines whether or not a sum of the individual degree of attention reset for the specific driver by the personal characteristic setting unit 120 and the degree of attention required for manipulation of a requested interface is larger than a predetermined threshold of attention required for safe driving, hereinafter referred to as 'safety attention'.

When the sum of the individual degree of attention and the degree of attention required for interface manipulation is larger than the threshold degree of safety attention, an adaptive interface providing unit 131 searches for a new substitute for the interface based on the similarity stored in the statistics database unit 110 and provides the new substitute for the interface to the driver.

If there is no substitute for the interface, the adaptive interface providing unit 131 issues an alert message to the driver.

FIGS. 2A and 2B are views showing a data collecting process performed by the statistics database unit 110 of the adaptive drive supporting apparatus 100, according to an embodiment of the present invention.

In order to obtain a statistics database, a statistical population of drivers is collected and divided into groups according to a predetermined driver classification criterion (S210). The driver classification criterion may be age, gender, or the like.

Then, driving operations such as radio manipulation and wiper operation are set (S220), and test conditions for calculation of a degree of attention are designed (S230). The test conditions may include a testing method, an object being tested, and a to-be-tested person.

After the design of the test conditions, a number of to-be-tested drivers suitable for each group are collected (S240). After all preparations are ready, a test for the degree of attention is carried out using an actual car to which sensors are attached or a simulator (S250).

As shown in FIG. 2B, a context feature extractor 211 extracts a context feature using an algorithm that analyzes information (context) on a driver, a car, and an external environment obtained using the actual car or the simulator, and stores the context feature in a database 212.

The result of the test is analyzed (S260), and the degree of attention for each group is calculated (S270). Next, the statistics database is obtained (S280).

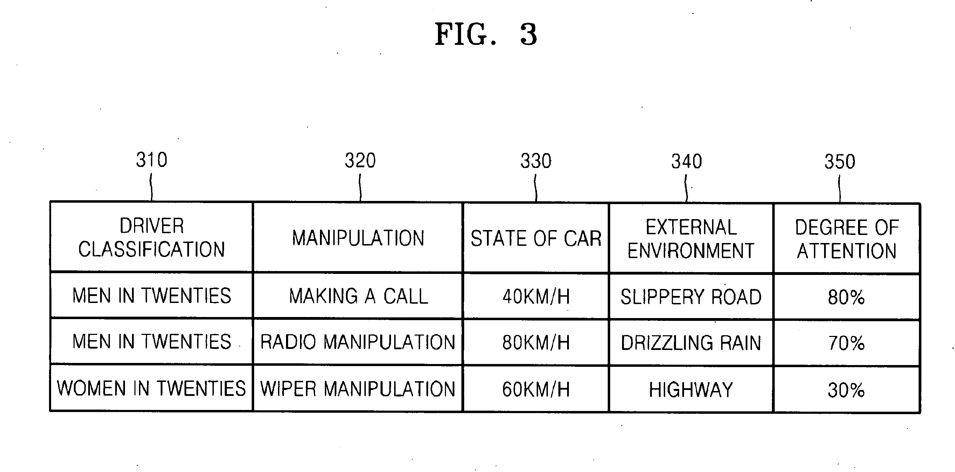

FIG. 3 is a view showing an example of the statistics database unit 110 of the adaptive drive supporting apparatus 100 shown in FIG. 1, according to an embodiment of the present invention.

In FIG. 3, 'Driver Classification' 310 denotes a common attribute of drivers in a group, for example, age and gender. ' Manipulation ' 320 denotes a manipulation which each of driver groups obtained by the 'Driver Classification' 310 performs. The ' Manipulation ' 320 may include a series of driver's manipulations such as making a telephone call, applying the brake pedal, and window manipulation.

'State of Car' 330 denotes the state of a car when each driver group performs a manipulation included in ' Manipulation ' 320. The 'State of Car' 330 includes all kinds of obtainable information about the car, such as a car's speed, tire pressure, and the number of dates when the car was used.

'External Environment' 340 denotes an external environment of a car when each driver group performs a manipulation included in 'Manipulation' 320. The 'External Environment' 430 includes all kinds of information on external conditions which may affect driving of the car, for example, temperature, humidity, weather, the state of a surface of a road, the shape of the road (for example, a sharp curved road), and the type of the road.

'Degree of Attention' 350 is a value obtained by statistically analyzing data obtained from information collected according to the items of 'Driver Classification' 310, 'Manipulation' 320, 'State of Car' 330, and 'External Environment' 340.

As an example, the degree of attention of a specific driver may be analyzed according to the speed of the car. Namely, when the driver does not drive the car, the degree of attention is determined to be 0%. When the driver drives the car at a speed of 100km/h, the degree of attention is determined to be 100%. When the driver drives the car at a speed of 50km/h, the degree of attention is determined to be 50%.

As another example, the degree of attention of a specific driver may be analyzed with respect to window manipulation. The degree of attention required for opening the widow during driving is set to be about 20%. The degree of attention required for tuning the radio is determined to be a value higher than 20%. In this manner, the average degree of attention for drivers in each group is analyzed and stored.

FIG. 4 is a flowchart illustrating a data collecting method performed by the personal characteristic setting unit 120 of the adaptive drive supporting apparatus 100 shown in FIG. 1, according to an embodiment of the present invention.

When the adaptive drive supporting apparatus 100 is powered on (S410), the personal characteristic setting unit 120 receives identification information of a driver and checks an average degree of attention for a group to which the driver belongs by referring to the statistics database unit 110. Next, the personal characteristic setting unit 120 collects information (context) on the driver, the state of a car, and an external environment using sensors, an RFID, or a GPS (S420).

When at least one of driving conditions such as the driving operation, the state of the car, and the external environment changes, the personal characteristic setting unit 120 accumulatively stores and updates the changed driving conditions and resets a degree of attention for the specific driver based on the average degree of attention required under the stored and updated driving conditions.

Thereafter, the personal characteristic setting unit 120 processes the collected context in such a format that the context can be used by the adaptive drive supporting apparatus 100 (S430), and stores the processed context in a database form (S440). The collecting and processing of the context feature are performed according to a technique generally known in the field of technology to which the present invention pertains.

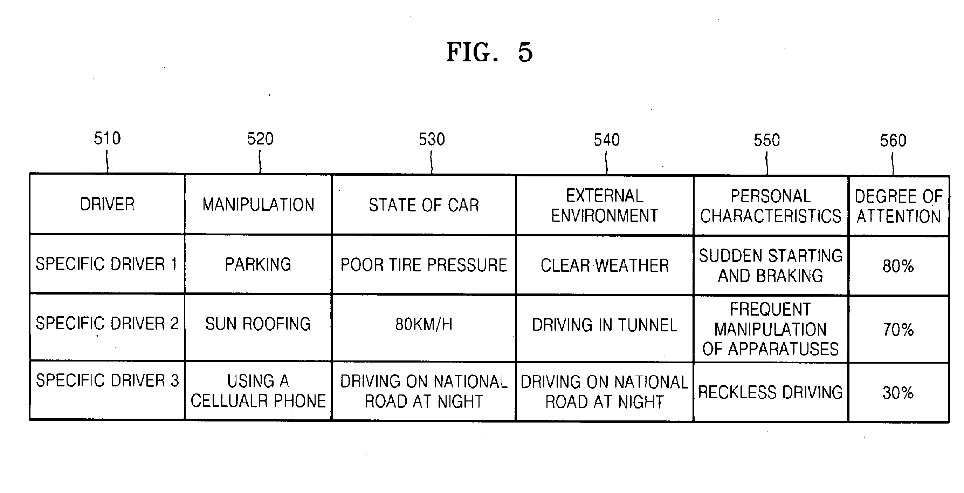

FIG. 5 is a view showing an example of the personal characteristic setting unit 120 of the adaptive drive supporting apparatus 100 shown in FIG. 1, according to an embodiment of the present invention.

Unlike the 'Driver Classification' 310 shown in FIG. 3, 'Driver' 510 denotes a specific driver. 'Manipulation' 520 denotes a manipulation which the specific driver included in the 'Driver' 510 performs. 'State of Car' 530 denotes the state of a car when the specific driver included in 'Driver' 510 performs a manipulation included in the 'Manipulation' 520.

'External Environment' 540 denotes an external environment of a car when the specific driver included in the 'Driver' 510 performs a manipulation included in the 'Manipulation' 520. 'Personal Feature' 550 denotes features of the specific driver. The 'Personal Feature' 550 may include a driving habit of the specific driver, a physical handicap of the specific driver, or the like.

'Degree of Attention' 560 is a value obtained by statistically analyzing data obtained from information collected according to the items of 'Driver' 510, 'Manipulation' 520, 'State of Car' 530, 'External Environment' 540, and 'Personal Feature' 550.

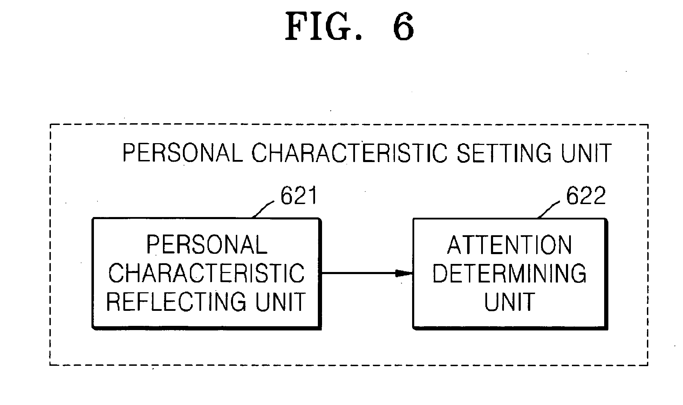

FIG. 6 is a block diagram of a construction of the personal characteristic setting unit 120 when it sets a degree of attention suitable for a personal characteristic, according to the embodiment of the present invention.

The personal characteristic setting unit 120 includes a personal characteristic reflecting unit 621 which reflects personal characteristics of each driver under a condition that different degrees of attention for drivers are stored and updated according to different states of drivers' cars and different external environments, and an attention determining unit 622 which determines an individual degree of attention based on the personal characteristics of each driver.

More specifically, personal features denote collected information such as a driving pattern. In a group of men in their thirties, some men who are experienced at using computers may be more apt at using an information apparatus than other men who have no experience. By taking the personal features into consideration, the degree of attention stored in the statistics database unit 110 is changed to be suitable for the specific driver.

Referring to the statistic database of FIG. 3, when a man in twenties drives a car at a speed of 40km/h on a slippery road, a degree of attention required for a ' making a call ' manipulation is set to 80%. If a specific driver is a man in his twenties, he first ascertains a degree of attention statistic by referring to the index of the statistic database.

Thereafter, the personal characteristic setting unit 120 records all of the data generated when the specific driver drove the car on such a slippery road at a speed of 40km/h while making a call. If the specific driver drove the car under the same or similar condition safely about ten times, the personal characteristic setting unit 120 determines that the specific driver is used to the driving condition, and resets a degree of attention of 75%, which is suitable for the specific driver, based on the degree of attention statistic of 80%. In this manner, the individual degrees of attention suitable for individual drivers are re-set by analyzing the accumulated information about driving patterns of individual drivers.

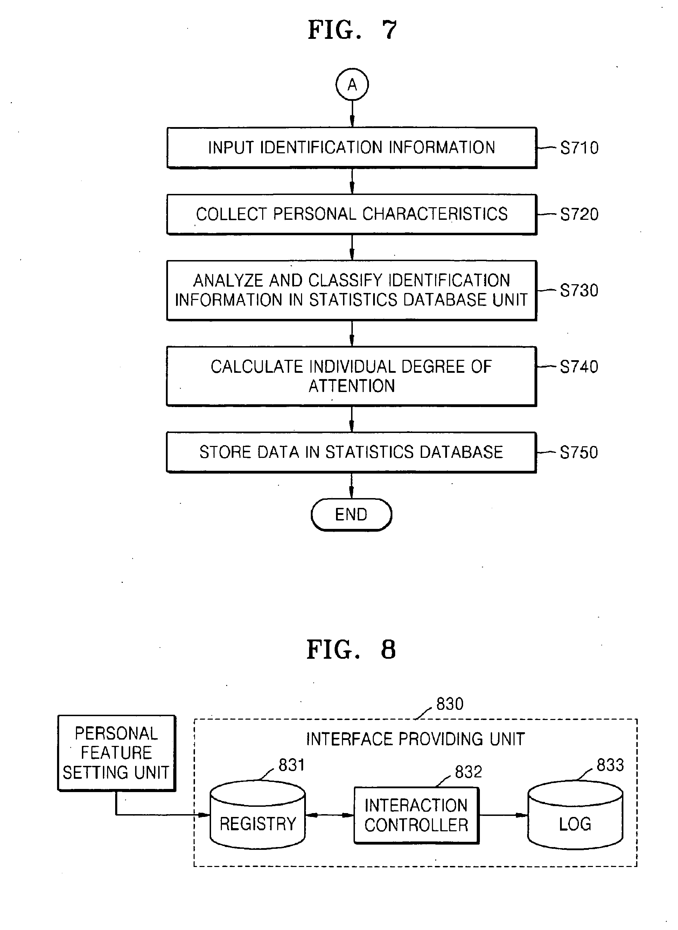

FIG. 7 is a flowchart illustrating a data collecting process performed by the personal characteristic setting unit 120 of the adaptive drive supporting apparatus 100 shown in FIG. 1, according to an embodiment of the present invention.

The personal characteristic setting unit 120 receives identification information of a driver from the statistics database shown in FIG. 2A (S710). When at least one of a plurality of driving conditions such as the driving operation, the state of the car, and the external environment changes, the personal characteristic setting unit 120 separately stores and updates the driving condition changes, and collects driving features of the specific driver (for example, sudden braking and reckless driving) under each of the conditions (S720).

Next, the personal characteristic setting unit 120 ascertains a degree of attention statistic for a group to which the driver belongs by referring to the statistics database shown in FIG. 2A, resets a degree of attention suitable for the specific driver by reflecting the driving features of the specific driver in the degree of attention statistic, and stores the reset degree of attention (S730 to S750).

FIG. 8 is a block diagram for providing suitable interfaces for a driver based on his/ her situation, according to an embodiment of the present invention.

The interface providing unit 830 includes a registry 831 which stores and manages available interfaces for cars, degrees of attention required for manipulations of the interfaces, and a similarity between functions of the interfaces.

As described above, the registry 831 stores and manages a degree of attention required for manipulation of each interface. For example, a degree of attention required for an operation of a radio component may be set to ' 20 ' , and a degree of attention required for manipulation of a mobile phone may be set to ' 40 ' .

As described above, the registry 831 also stores and manages information on similarity between the functions of the interfaces. For example, when a degree of attention to a text e-mail function is 20, existence of a voice mail application similar to the text e-mail function is ascertained, and a degree of attention for the voice mail application is checked to be 15.

In addition, using a log-on database 833 which stores information of an individual driver who logs into an interface or an application, it can be checked what interface or application the driver frequently uses.

An interaction controller 832 substantially activates an interface suitable for each driver based on the degree of attention and the interface-function similarity that are managed by the registry 831.

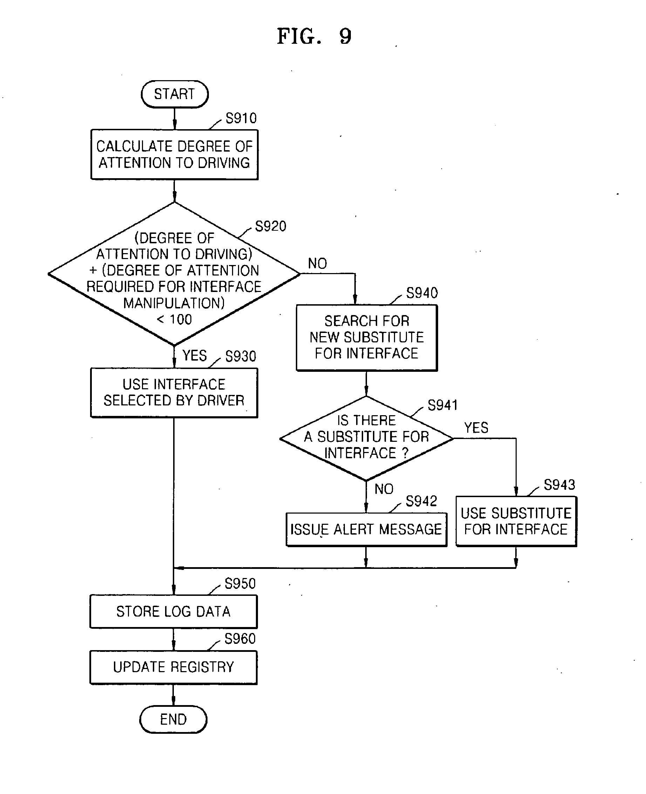

FIG. 9 is a flowchart showing a method of providing an interface suitable for a driver' s situation, which is performed by the interface providing unit 130, according to another embodiment of the present invention.

The interface providing unit 130 calculates a degree of attention associated with driving using the statistics database unit 110 (S910). The interface providing unit 130 determines whether or not a sum of the individual degree of attention reset for each driver by the personal characteristic setting unit 120 and the degree of attention required for manipulation of an interface selected by each driver is larger than a predetermined threshold value (for example, 100) (S920).

When the sum of the individual degree of attention and the degree of attention required for interface manipulation is not larger than the threshold value (for example, 100), the driver is allowed to use the selected interface and application (S930).

When the sum of the individual degree of attention and the degree of attention required for interface manipulation is larger than the threshold value (for example, 100), the interface providing unit 130 searches for a new substitute for the selected interface based on degrees of attention for the interfaces and the interface function similarity that are stored in the statistics database unit 110 and the registry 831 (S940).

If there is a substitute for the selected interface, the interface providing unit 130 provides the substitute for the interface to the driver (S943). If not, the interface providing unit 130 issues an alert message to the driver (S942).

Next, information on the selected interface and the substitute for the interface and log-on data relating to generation or non-generation of the alert message are used to update the registry 831 of the interface providing unit 130 (S960). By storing and updating operations S950 and S960, a learning unit 140 shown in FIG. 1 learns a registry which is dynamically requested for each condition of each driver.

The flowchart shown in FIG. 9 will now be more specified by taking an example. When a degree of attention required for a driving operation of a driver is 80 and a degree of attention required for a text e-mail application selected by the driver is 30, a sum of the degree of attention required for the driving operation and the degree of attention required for the selected application exceeds a threshold value of 100. In this case, a new substitute for the selected application is searched for.

Among similar applications stored in the registry 831 of the interface providing unit 130, a voice e-mail application having a degree of attention of 15, which is smaller than that of the text e-mail application, is found. Since the sum of the degree of attention of 80 required for the driving operation and the degree of attention of 15 required for the voice e-mail application is not larger than the threshold value 100, the voice e-mail application can be selected as a substitute for the previously selected application.

The state of the car and external environment of the driver who uses the voice e-mail application are stored to update the registry 831 of the interface providing unit 130.

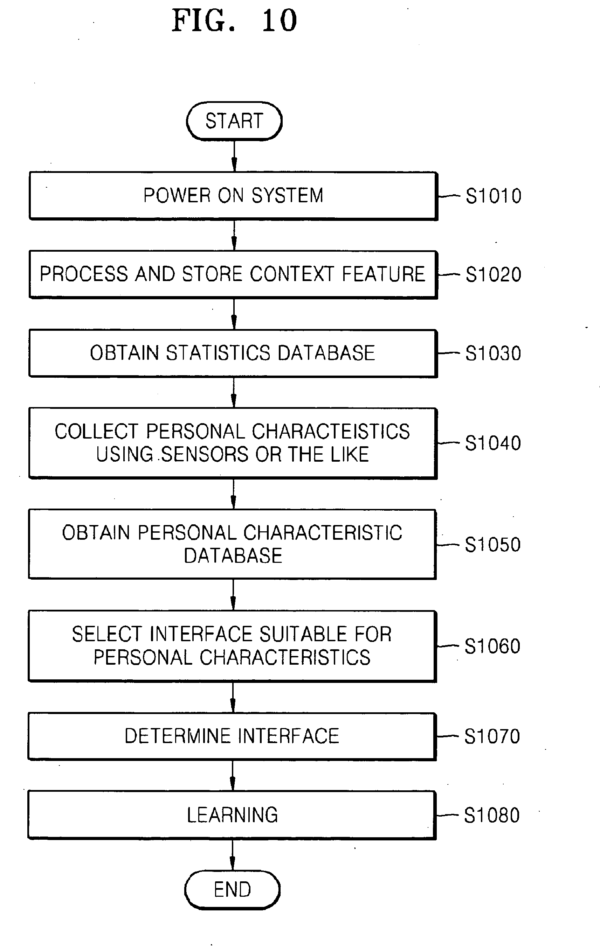

FIG. 10 is a flowchart showing an adaptive drive supporting method according to an embodiment of the present invention. Referring to FIG. 10, a group classification criterion is set. A degree of attention required for a predetermined statistical population of drivers under predetermined test conditions when at least one of a plurality of conditions, such as a driving operation, the state of a car, and an external environment, changes is ascertained from a context feature and stored (S1010 and S1020). A statistics database unit is established using the stored degree of attention (S1030).

Next, to check a driving characteristic of each driver and provide dynamically an interface to each driver, each driver in his car checks information on the state of the car and the external environment using a sensor, an RFID, a GPS, or the like (S1040).

The statistics database unit checks an index of each driver, and a reference degree of attention is set based on the checked data stored in the statistics database unit. Next, a degree of attention for each driver is reset based on the characteristics of each server, the state of the car, and the external environment ascertained in operation S1040 (S1050).

Subsequently, it is determined whether or not the degree of attention reset for each driver is larger than a threshold degree of attention required for safe driving when the driver selects an interface. If the reset degree of attention is not larger than the threshold degree of attention, the interface is provided to the driver, and if the reset degree of attention is larger than the threshold degree of attention, a new substitute for the selected interface may be provided to the driver, or an alert message may be issued to the driver (S1060).

When the user of non-use of the selected interface is determined (S1070), information about interface selection (log-on) according to a driver's characteristics, a state of a car, and an external environment is accumulatively stored and updated, so that the interface selecting process is learned (S1080).

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion.

While the present invention has been particularly shown and described with reference to exemplary embodiments thereof, it will be understood by those skilled in the art that various changes in form and details may be made therein without departing from the scope of the invention as defined by the appended claims. The exemplary embodiments should be considered in descriptive sense only and not for purposes of limitation. Therefore, the scope of the invention is defined not by the detailed description of the invention but by the appended claims, and all differences within the scope will be construed as being included in the present invention.

## Claims

1. An adaptive drive supporting apparatus (100) comprising: a statistics database unit (110) which stores and manages information on an average degree of attention required when a driving operation, a state of a car, or an external environment changes and information on degrees of attention required for manipulations of interfaces of the car; a personal characteristic setting unit (120) which sets an individual degree of attention for each driver based on the average degree of attention according to a change in at least one of the driving operation, the state of the car, and the external environment; and an interface providing unit (130) which determines whether or not a sum of the individual degree of attention and the degree of attention required when each driver manipulates a requested interface is larger than a predetermined threshold degree of attention required for safe driving, **characterized in that**
the statistics database unit (110) furthermore stores and manages information on a similarity between the functions of the interfaces; and
the adaptive drive supporting apparatus (100) further comprises an adaptive interface providing unit (131), wherein, when the sum of the individual degree of attention and the degree of attention required for interface manipulation is larger than the threshold degree of attention, the adaptive interface providing unit searches for a new substitute for the requested interface based on the similarity and provides the new substitute for the interface to the driver, and wherein, if there is no substitute for the interface, the adaptive interface providing unit issues an alert message to the driver.

2. The adaptive drive supporting apparatus of claim 1, wherein the average degree of attention is set based on degrees of attention required for drivers included in each of groups into which a plurality of arbitrary drivers are classified according to a specific criterion, when at least one of a driving operation, a state of a car, and an external environment changes.

3. The adaptive drive supporting apparatus of claim 1, wherein the personal characteristic setting unit stores driving characteristics of the driver and reflects the driver's driving characteristics in resetting the individual degree of attention for the driver.

4. The adaptive drive supporting apparatus of claim 1, further comprising a learning unit (140) which checks interfaces that are available in a car according to the individual degree of attention for the driver, based on the individual degree of attention for the driver, the degree of attention for the interface manipulation, and the similarity.

5. The adaptive drive supporting apparatus of claim 1, wherein the state of the car and the external environment of the car are obtained from at least one of sensors, an RFID (Radio Frequency Identification), and a GPS (Global Positioning System).

6. The adaptive drive supporting apparatus of claim 2, wherein the specific criterion comprises a gender and an age range.

7. An adaptive driving supporting method comprising: storing and managing information on an average degree of attention required when a driving operation, a state of a car, or an external environment changes and information on degrees of attention required for manipulations of interfaces of the car,; setting an individual degree of attention for each driver based on the average degree of attention according to a change in at least one of the driving operation, the state of the car, and the external environment; and determining whether or not a sum of the individual degree of attention and the degree of attention required when each driver manipulates a requested interface is larger than a predetermined threshold degree of attention required for safe driving **characterized in that**
the adaptive driving supporting method further comprises storing and managing information on a similarity between the functions of the interfaces; and
when the sum of the individual degree of attention and the degree of attention required for interface manipulation is larger than the threshold degree of attention, searching for a new substitute for the requested interface based on the similarity and providing the new substitute for the interface to the driver, and if there is no substitute for the interface, issuing an alert message to the driver.

8. The adaptive drive supporting method of claim 7, wherein in the storing and managing of the information on the average degree of attention, the average degree of attention is set based on degrees of attention required for drivers included in each of groups into which a plurality of arbitrary drivers are classified according to a specific criterion, when at least one of a driving operation, a state of a car, and an external environment changes.

9. The adaptive drive supporting method of claim 7, wherein in the resetting of the individual degree of attention, driving characteristics of the driver are stored and reflected in resetting the individual degree of attention for the driver.

10. The adaptive drive supporting method of claim 7, further comprising checking interfaces that are available in a car according to the individual degree of at tention for the driver, based on the individual degree of attention for the driver, the degree of attention for the interface manipulation, and the similarity.

11. The adaptive drive supporting method of claim 7, wherein the state of the car and the external environment of the car are obtained from at least one of sensors, an RFID (Radio Frequency Identification), and a GPS (Global Positioning System).

12. A computer readable recording medium which records a computer readable program for executing the method of one of claims 7 through 11.

## Patentansprüche

1. Adaptive Fahrunterstützungsvorrichtung (100), umfassend: eine Statistikdatenbank-Einheit (110), die Informationen über einen mittleren Aufmerksamkeitsgrad, der benötigt ist, wenn sich eine Fahrtätigkeit, ein Zustand eines Autos oder eine äußere Umgebung ändert, und Informationen über Aufmerksamkeitsgrade, die zu Bedienungen von Schnittstellen des Autos benötigt sind, speichert und verwaltet; eine Einstelleinheit (120) für persönliche Eigenschaften, die einen individuellen Aufmerksamkeitsgrad für jeden Fahrer basierend auf dem mittleren Aufmerksamkeitsgrad gemäß einer Änderung von wenigstens einem von der Fahrtätigkeit, dem Zustand des Autos und der äußeren Umgebung einstellt; und eine Einheit (130) zum Bereitstellen einer Schnittstelle, die bestimmt, ob eine Summe des individuellen Aufmerksamkeitsgrades und des Aufmerksamkeitsgrades, der benötigt ist, wenn jeder Fahrer eine angeforderte Schnittstelle bedient, größer ist als ein vorherbestimmter Schwellenwert des Aufmerksamkeitsgrades, der zum sicheren Fahren benötigt ist, oder nicht, **dadurch gekennzeichnet, dass**
die Statistikdatenbank-Einheit (110) ferner Informationen über eine Ähnlichkeit zwischen den Funktionen der Schnittstellen speichert und verwaltet; und
die adaptive Fahrunterstützungsvorrichtung (100) ferner eine Einheit (131) zum Bereitstellen einer adaptiven Schnittstelle umfasst, wobei, wenn die Summe des individuellen Aufmerksamkeitsgrades und des Aufmerksamkeitsgrades, der zur Bedienung der Schnittstelle benötigt ist, größer ist als der Schwellenwert des Aufmerksamkeitsgrades, die Einheit zum Bereitstellen einer adaptiven Schnittstelle einen neuen Ersatz für die angeforderte Schnittstelle basierend auf der Ähnlichkeit sucht und den neuen Ersatz für die Schnittstelle dem Fahrer bereitstellt, und wobei die Einheit zum Bereitstellen einer adaptiven Schnittstelle eine Alarmmitteilung an den Fahrer ausgibt, wenn es keinen Ersatz für die Schnittstelle gibt.

2. Adaptive Fahrunterstützungsvorrichtung nach Anspruch 1, wobei der mittlere Aufmerksamkeitsgrad basierend auf Aufmerksamkeitsgraden eingestellt ist, die für Fahrer benötigt sind, die in jeder der Gruppen beinhaltet sind, in die eine Mehrzahl von beliebigen Fahrern gemäß eines spezifischen Kriteriums klassifiziert sind, wenn sich wenigstens eines von einer Fahrtätigkeit, eines Zustand eines Autos und einer äußeren Umgebung ändert.

3. Adaptive Fahrunterstützungsvorrichtung nach Anspruch 1, wobei die Einstelleinheit für persönliche Eigenschaften Fahreigenschaften des Fahrers speichert und die Fahreigenschaften des Fahrers beim Wiedereinstellen des individuellen Aufmerksamkeitsgrades für den Fahrer widerspiegelt.

4. Adaptive Fahrunterstützungsvorrichtung nach Anspruch 1, ferner umfassend eine Lerneinheit (140), die Schnittstellen, die in einem Auto verfügbar sind, gemäß dem individuellen Aufmerksamkeitsgrad für den Fahrer überprüft, basierend auf dem individuellen Aufmerksamkeitsgrad für den Fahrer, dem Aufmerksamkeitsgrad für die Schnittstellenbedienung und der Ähnlichkeit.

5. Adaptive Fahrunterstützungsvorrichtung nach Anspruch 1, wobei der Zustand des Autos und die äußere Umgebung des Autos von wenigstens einem von Sensoren, einem RFID (Radio Frequency identification) und einem GPS (Global Positioning System) erhalten sind.

6. Adaptive Fahrunterstützungsvorrichtung nach Anspruch 2, wobei das spezifische Kriterium ein Geschlecht und einen Altersbereich umfasst.

7. Adaptives Fahrunterstützungsverfahren, umfassend: Speichern und Verwalten von Informationen über einen mittleren Aufmerksamkeitsgrad, der benötigt wird, wenn sich eine Fahrtätigkeit, ein Zustand eines Autos oder eine äußere Umgebung ändert, und Informationen über Aufmerksamkeitsgrade, die zu Bedienungen von Schnittstellen des Autos benötigt werden; Einstellen eines individuellen Aufmerksamkeitsgrades für jeden Fahrer basierend auf dem mittleren Aufmerksamkeitsgrad gemäß einer Änderung von wenigstens einem von der Fahrtätigkeit, dem Zustand des Autos und der äußeren Umgebung; und Bestimmen, ob eine Summe des individuellen Aufmerksamkeitsgrades und des Aufmerksamkeitsgrades, der benötigt wird, wenn jeder Fahrer eine angeforderte Schnittstelle bedient, größer ist als ein vorherbestimmter Schwellenwert des Aufmerksamkeitsgrades, der zum sicheren Fahren benötigt wird, oder nicht, **dadurch gekennzeichnet, dass**
das adaptive Fahrunterstützungsverfahren ferner umfasst: Speichern und Verwalten von Informationen über eine Ähnlichkeit zwischen den Funktionen der Schnittstellen; und
wenn die Summe des individuellen Aufmerksamkeitsgrades und des Aufmerksamkeitsgrades, der zur Bedienung der Schnittstelle benötigt wird, größer ist als der Schwellenwert des Aufmerksamkeitsgrades, Suchen eines neuen Ersatzes für die angeforderte Schnittstelle basierend auf der Ähnlichkeit und Bereitstellen des neuen Ersatzes für die Schnittstelle an den Fahrer und Ausgeben einer Alarmmitteilung an den Fahrer, wenn es keinen Ersatz für die Schnittstelle gibt.

8. Adaptives Fahrunterstützungsverfahren nach Anspruch 7, wobei beim Speichern und Verwalten der Information über den mittleren Aufmerksamkeitsgrad der mittlere Aufmerksamkeitsgrad basierend auf Aufmerksamkeitsgraden eingestellt ist, die für Fahrer benötigt werden, die in jeder der Gruppen beinhaltet sind, in die eine Mehrzahl von beliebigen Fahrern gemäß eines spezifischen Kriteriums klassifiziert werden, wenn sich wenigstens eines von einer Fahrtätigkeit, eines Zustand eines Autos und einer äußeren Umgebung ändert.

9. Adaptives Fahrunterstützungsverfahren nach Anspruch 7, wobei beim Wiedereinstellen des individuellen Aufmerksamkeitsgrades Fahreigenschaften des Fahrers gespeichert werden und im Wiedereinstellen des individuellen Aufmerksamkeitsgrades für den Fahrer widergespiegelt werden.

10. Adaptives Fahrunterstützungsverfahren nach Anspruch 7, ferner umfassend Überprüfen von Schnittstellen, die in einem Auto verfügbar sind, gemäß dem individuellen Aufmerksamkeitsgrades für den Fahrer, basierend auf dem individuellen Aufmerksamkeitsgrad für den Fahrer, dem Aufmerksamkeitsgrad für die Schnittstellenbedienung und der Ähnlichkeit.

11. Adaptives Fahrunterstützungsverfahren nach Anspruch 7, wobei der Zustand des Autos und die äußere Umgebung des Autos von wenigstens einem von Sensoren, einem RFID (Radio Frequency Identification) und einem GPS (Global Positioning System) erhalten werden.

12. Computerlesbares Speichermedium, das ein computerlesbares Programm zum Ausführen des Verfahrens nach einem der Ansprüche 7 bis 11 speichert.

## Revendications

1. Dispositif adaptatif d'aide à la conduite (100) comprenant : une unité de base de données statistiques (110) qui stocke et gère des informations sur un degré d'attention moyen requis quand une opération de conduite, un état d'une automobile ou un environnement extérieur change et des informations sur des degrés d'attention requis pour des manipulations d'interfaces de l'automobile ; une unité d'établissement de caractéristiques personnelles (120) qui établit un degré d'attention individuel pour chaque conducteur sur la base du degré d'attention moyen en fonction d'un changement dans au moins une opération de conduite, un état de l'automobile ou un environnement extérieur ; et une unité de fourniture d'interface (130) qui détermine si une somme du degré d'attention individuel et du degré d'attention requis quand chaque conducteur manipule une interface demandée est ou non supérieure à un degré d'attention de seuil prédéterminé requis pour une conduite sûre, **caractérisé en ce que**
l'unité de base de données statistiques (110) stocke et gère en outre des informations sur une similarité entre les fonctions des interfaces ; et
le dispositif adaptatif d'aide à la conduite (100) comprend en outre une unité de fourniture d'interface adaptative (131), dans lequel, quand la somme du degré d'attention individuel et du degré d'attention requis pour une manipulation d'interface est supérieure au degré d'attention de seuil, l'unité de fourniture d'interface adaptative recherche un nouveau substitut pour l'interface demandée sur la base de la similarité et fournit le nouveau substitut pour l'interface au conducteur, et dans lequel, s'il n'existe aucun substitut pour l'interface, l'unité de fourniture d'interface adaptative émet un message d'alerte à destination du conducteur.

2. Dispositif adaptatif d'aide à la conduite selon la revendication 1, dans lequel le degré d'attention moyen est établi sur la base de degrés d'attention requis pour des conducteurs inclus dans chacun de groupes dans lesquels une pluralité de conducteurs arbitraires sont classés selon un critère spécifique, quand au moins une opération de conduite, un état d'une automobile ou un environnement extérieur change.

3. Dispositif adaptatif d'aide à la conduite selon la revendication 1, dans lequel l'unité d'établissement de caractéristiques personnelles stocke des caractéristiques de conduite du conducteur et répercute les caractéristiques de conduite du conducteur en ré-établissant le degré d'attention individuel pour le conducteur.

4. Dispositif adaptatif d'aide à la conduite selon la revendication 1, comprenant en outre une unité d'apprentissage (140) qui vérifie des interfaces qui sont disponibles dans une automobile en fonction du degré d'attention individuel pour le conducteur, sur la base du degré d'attention individuel pour le conducteur, du degré d'attention pour la manipulation d'interface et de la similarité.

5. Dispositif adaptatif d'aide à la conduite selon la revendication 1, dans lequel l'état de l'automobile et l'environnement extérieur de l'automobile sont obtenus à partir d'au moins un parmi des capteurs, une RFID (identification par radiofréquence) et un GPS (système de localisation mondial).

6. Dispositif adaptatif d'aide à la conduite selon la revendication 2, dans lequel le critère spécifique comprend un sexe et une fourchette d'âge.

7. Procédé adaptatif d'aide à la conduite comprenant : le stockage et la gestion d'informations sur un degré d'attention moyen requis quand une opération de conduite, un état d'une automobile ou un environnement extérieur change et des informations sur des degrés d'attention requis pour des manipulations d'interfaces de l'automobile ; l'établissement d' un degré d' attention individuel pour chaque conducteur sur la base du degré d'attention moyen en fonction d'un changement dans au moins une opération de conduite, un état de l'automobile ou un environnement extérieur ; et la détermination du fait qu'une somme du degré d'attention individuel et du degré d'attention requis quand chaque conducteur manipule une interface demandée est ou non supérieure à un degré d'attention de seuil prédéterminé requis pour une conduite sûre, **caractérisé en ce que**
le procédé adaptatif d'aide à la conduite comprend en outre le stockage et la gestion d'informations sur une similarité entre les fonctions des interfaces ; et
quand la somme du degré d' attention individuel et du degré d'attention requis pour une manipulation d' interface est supérieure au degré d'attention de seuil, la recherche d'un nouveau substitut pour l'interface demandée sur la base de la similarité et la fourniture du nouveau substitut pour l'interface au conducteur, et, s'il n'existe aucun substitut pour l'interface, l'émission d' un message d'alerte à destination du conducteur.

8. Procédé adaptatif d'aide à la conduite selon la revendication 7, dans lequel, dans le stockage et la gestion des informations sur le degré d'attention moyen, le degré d'attention moyen est établi sur la base de degrés d'attention requis pour des conducteurs inclus dans chacun de groupes dans lesquels une pluralité de conducteurs arbitraires sont classés en fonction d'un critère spécifique, quand au moins une opération de conduite, un état d'une automobile ou un environnement extérieur change.

9. Procédé adaptatif d'aide à la conduite selon la revendication 7, dans lequel, dans le ré-établissement du degré d'attention individuel, des caractéristiques de conduite du conducteur sont stockées et répercutées en ré-établissant le degré d'attention individuel pour le conducteur.

10. Procédé adaptatif d'aide à la conduite selon la revendication 7, comprenant en outre la vérification d'interfaces qui sont disponibles dans une automobile en fonction du degré d'attention individuel pour le conducteur, sur la base du degré d'attention individuel pour le conducteur, du degré d'attention pour la manipulation d'interface et de la similarité.

11. Procédé adaptatif d'aide à la conduite selon la revendication 7, dans lequel l'état de l'automobile et l'environnement extérieur de l'automobile sont obtenus à partir d'au moins un parmi des capteurs, une RFID (identification par radiofréquence) et un GPS (système de localisation mondial).

12. Support d'enregistrement lisible par ordinateur qui contient un programme lisible par ordinateur pour exécuter le procédé selon l'une des revendications 7 à 11.
